# FASCICULE DE BREVET EUROPEEN

(11) **EP 1 957 777 B1**
(45) Date de publication et mention de la délivrance du brevet: **14.09.2016**
(21) Numéro de dépôt: 06842084.3
(22) Date de dépôt: 04.12.2006
(51) Int. Cl.: F02D 41/00

(54) **PROCEDE DE COMMANDE D'UN MOTEUR COMPORTANT UNE BOUCLE DE RECIRCULATION DE GAZ D'ECHAPPEMENT**
VERFAHREN ZUR STEUERUNG EINES MIT EINEM ABGAS-WIEDERGEWINNUNGSZYKLUS AUSGESTATTETEN MOTORS
METHOD FOR CONTROLLING AN ENGINE PROVIDED WITH AN EXHAUST GAS RECYCLING LOOP

(30) Priorité: 08.12.2005 FR 0512453
(43) Date de publication de la demande: 20.08.2008
(73) Titulaire: Renault SAS, 92100 Boulogne Billancourt (FR)
(72) Inventeur: BUIS, Emmanuel, F-92330 Sceaux (FR); LEPORCQ, Michel, F-91360 Epinay Sur Orge (FR)
(86) Numéro de dépôt international: PCT/FR2006/051273
(87) Numéro de publication internationale: WO 2007/066033

(56) Documents cités:
- US-B1- 6 408 834
- PATENT ABSTRACTS OF JAPAN vol. 2000, no. 25, 12 avril 2001 (2001-04-12) & JP 2001 207917 A (TOYOTA MOTOR CORP), 3 août 2001 (2001-08-03)
- PATENT ABSTRACTS OF JAPAN vol. 1996, no. 08, 30 août 1996 (1996-08-30) & JP 08 093510 A (MITSUBISHI MOTORS CORP), 9 avril 1996 (1996-04-09)

## Description

La présente invention se rapporte à un procédé de commande d'un moteur d'un véhicule, notamment automobile.

En particulier, l'invention concerne un procédé appliqué à un moteur pourvu d'un système de recirculation de gaz d'échappement et plus particulièrement encore pourvu d'une boucle de recirculation de type basse pression.

Un moteur de ce type est déjà connu.

Il comporte typiquement un bloc moteur avec un collecteur d'échappement et d'admission.

En suivant le trajet des gaz d'échappement, le collecteur d'échappement est en communication avec une turbine d'un turbocompresseur.

Les gaz possèdent une énergie apte à faire tourner la turbine et un compresseur de la laquelle il est solidaire.

Les gaz traversant la turbine sont évacués vers un filtre à particules pour y subir un traitement connu en soi.

En sortie de ce filtre, une partie au moins des gaz traités est recirculée à l'aide de la boucle précitée tandis que l'autre partie continue dans une conduite d'échappement vers un volet échappement et un silencieux.

Dans la boucle de recirculation basse pression, un refroidisseur permet d'abaisser avantageusement une température des gaz recirculés.

En outre, une vanne de recirculation disposée en aval du refroidisseur permet de contrôler le débit de ces gaz.

On notera ici que ce débit est également contrôlé par un volet d'admission.

En effet, celui-ci est apte à modifier une différence de pression des gaz aux bornes de la vanne, ce qui conduit à modifier le débit.

Les gaz recirculés débouchent ensuite dans une conduite où circule de l'air provenant d'une entrée d'air et d'un filtre à air.

Le mélange de gaz ainsi constitué est alors acheminé vers le collecteur d'admission du moteur en passant par le compresseur et éventuellement un refroidisseur de suralimentation d'air.

Il est connu que, comparé notamment à un moteur doté d'un système de recirculation haute pression, un tel moteur offre des performances qui respectent bien mieux des contraintes antipollution imposées par des normes notamment européennes.

En particulier, il est connu que ce type de moteur permet de réduire encore plus des émissions nocives d'oxydes d'azote (Nox) et de particules polluantes telles des particules de suie.

Toutefois, leur utilisation étant encore récente, on ne connaît pas de procédés de commande réellement adaptés à ce type de moteur.

En particulier, on ne connaît pas de procédés de commande qui permettent d'optimiser une régulation du débit d'air et/ou du taux de recirculation en fonction d'un état de fonctionnement de la vanne de recirculation et du volet d'échappement.

On connaît des publications US-A-6.408.834 et JP-A-2001.207.917 des procédés de commande d'un moteur pourvu d'une boucle de recirculation du type à haute pression. Ces procédés ne concernent pas les boucles de recirculation du type à basse pression. On connaît aussi de la publication US-A-2002/0.174.654 un procédé de commande d'un moteur pourvu d'une boucle de recirculation du type à basse pression, dans lequel les gaz d'échappement passent à travers une turbine, mais les gaz d'échappement passant à travers la turbine ne sont pas acheminés vers un filtre à particules. Le procédé divulgue une régulation du débit d'air et/ou du taux de recirculation en fonction d'un état de fonctionnement d'une vanne de recirculation et d'un volet d'échappement, mais leur fonctionnement n'est pas exclusif l'une de l'autre.

Un but de l'invention est donc de pallier ces inconvénients.

A cet effet, on propose un procédé de commande d'un moteur pourvu d'une boucle de recirculation d'un gaz d'échappement du type basse pression dans laquelle les gaz d'échappement passent à travers une turbine et sont acheminés vers un filtre à particules duquel une conduite de dérivation permet de recirculer au moins en partie des gaz d'échappement vers un compresseur, caractérisé en ce qu'il comporte une étape où l'on régule un paramètre prédéterminé de fonctionnement du moteur en contrôlant exclusivement une position d'une vanne de recirculation du gaz d'échappement disposée dans la boucle si la mesure d'une grandeur prédéterminée de cette vanne respecte un critère prédéterminé, ou en contrôlant exclusivement une position d'un volet d'échappement disposé hors de cette boucle si ladite mesure ne respecte pas ledit critère.

Des aspects préférés mais non limitatifs de ce procédé sont les suivants :
- le paramètre prédéterminé de fonctionnement du moteur est un taux de recirculation du gaz d'échappement ;
- le paramètre prédéterminé est un débit d'air destiné à être mélangé au gaz recirculé ;
- la grandeur prédéterminée est la position de la vanne et le respect du critère consiste à déterminer si cette position est inférieure à une valeur seuil estimée ;
- on détermine la position du volet et de la vanne au moyen d'un seul régulateur dont on choisit automatiquement un gain d'amplification (Kp, Ki) en fonction du résultat lié au critère ;
- on estime la valeur seuil à partir d'une cartographie en régime moteur et débit carburant.

On propose en outre selon l'invention un moteur comprenant une boucle de recirculation d'un gaz d'échappement du type basse pression dans laquelle les gaz d'échappement passent à travers une turbine, des moyens de régulation d'un paramètre de fonctionnement du moteur, des moyens de contrôle d'une position d'une vanne de recirculation du gaz d'échappement disposé hors de cette boucle, et des moyens de mesure d'une grandeur prédéterminée de la vanne, caractérisé en ce que les gaz d'échappement passant à travers la turbine sont acheminés vers un filtre à particules duquel une conduite de dérivation permet de recirculer au moins en partie des gaz d'échappement vers un compresseur, et en ce que les moyens de régulation sont adaptés pour agir exclusivement sur les moyens de contrôle de la position de la vanne si la mesure de la grandeur relative à celle-ci respecte un critère prédéterminé, ou exclusivement sur les moyens de contrôle de la position du volet si ladite mesure ne respecte pas ledit critère.

Des aspects préférés mais non limitatifs de ce moteur sont les suivants :
- le paramètre prédéterminé de fonctionnement du moteur est un taux de recirculation du gaz d'échappement ;
- le paramètre prédéterminé est un débit d'air destiné à être mélangé au gaz recirculé ;
- les moyens de régulation comportent un seul régulateur dont un gain d'amplification est sélectionné automatiquement en fonction du résultat lié au critère.

D'autres aspects, buts et avantages de l'invention apparaîtront mieux à la lecture de la description suivante de l'invention, faite en référence aux dessins annexés sur lesquels :
- la figure 1 illustre à titre d'exemple non limitatif un moteur apte à mettre en oeuvre le procédé de l'invention,
- la figure 2 est un schéma simplifié d'une structure de régulation d'un débit d'air selon l'invention,
- la figure 3 montre un schéma plus détaillé d'un régulateur utilisé dans la structure de la figure 2,
- la figure 4 montre un schéma plus détaillé d'un séparateur de signal de commande utilisé dans la structure de la figure 2,
- la figure 5 est un schéma d'un exemple non limitatif d'une structure de régulation conforme à l'invention.

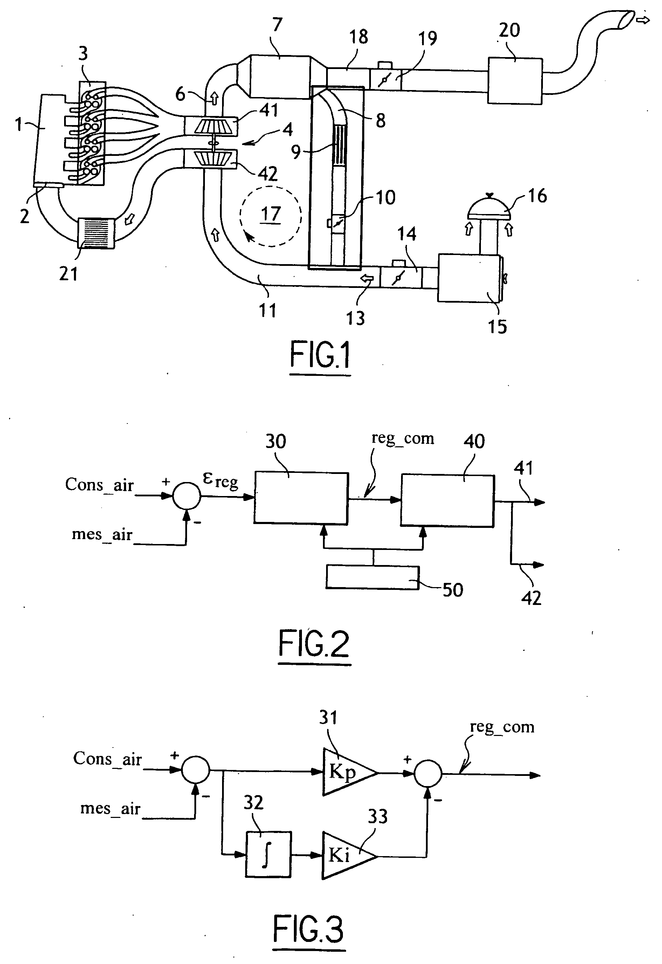

En se référant à la figure 1, on a illustré un moteur de l'invention.

Il comporte un bloc moteur 1, un collecteur d'admission 2 et d'échappement 3, un turbocompresseur 4 composé d'une turbine 41 et d'un compresseur 42.

Des gaz d'échappement 6, qui passent à travers la turbine 41, sont acheminés vers un filtre à particules 7 duquel une conduite de dérivation 8 permet de recirculer au moins en partie ces gaz vers le compresseur 42.

Dans cette conduite 8, un refroidisseur 9 et une vanne de recirculation 10 sont aptes à refroidir et contrôler un débit de ces gaz, respectivement.

Par ailleurs, cette conduite 8 débouche dans une autre conduite 11 dans laquelle de l'air 13 peut circuler selon un débit contrôlé en amont par un volet d'admission d'air 14.

On notera que cet air provient classiquement d'un filtre à air 15 connecté à une entrée d'air 16.

L'ensemble composé de la conduite 8, du filtre à particules 7, du turbocompresseur et de la conduite 11 forme une boucle de recirculation basse pression 17.

Encore en sortie du filtre à particules 7, les gaz d'échappement qui ne sont pas recirculés sont évacués dans une conduite d'échappement 18 dans laquelle se trouve un volet d'échappement 19 et un silencieux 20.

Le volet d'échappement 19 en coopération avec la vanne 10, permet notamment de contrôler le débit des gaz recirculés.

On notera ici que par construction du moteur, on doit considérer qu'une régulation de ce débit revient automatiquement à réguler le taux de recirculation des gaz d'échappement, noté couramment taux EGR.

En effet, ces deux grandeurs sont reliées directement l'une à l'autre.

Finalement, le moteur illustré à titre d'exemple non limitatif sur ladite figure 1 comporte typiquement un refroidisseur d'air 21 disposé entre le compresseur 42 et le collecteur d'admission 2.

En se référant maintenant à la figure 2, on a représenté en vue d'ensemble une structure de régulation du débit d'air.

La structure comporte un régulateur 30 qui admet en entrée en différence entre une mesure de débit d'air *mes*_*air*, mise en oeuvre au moyen d'un capteur connu en soi, et une consigne de débit d'air *cons_air,* élaborée en amont de ce régulateur.

Le régulateur est apte à délivrer un signal de commande *reg*_*com* qui permet de contrôler selon un critère prédéterminé la vanne EGR 10 et/ou le volet d'échappement 19.

Selon un aspect de l'invention, le signal de commande précité permet de contrôler une position d'ouverture/fermeture de la vanne EGR 10 et du volet 19.

Et le critère prédéterminé concerne un état de fonctionnement de la vanne EGR 10.

En particulier, selon cet aspect, le critère consiste à déterminer si la position de la vanne 10 est apte à assurer un fonctionnement jugé satisfaisant.

A titre d'exemple non limitatif, on peut considérer qu'une ouverture au-delà de 60% de la vanne EGR 10 ne convient pas pour réguler le débit d'air.

Dans ce cas, le procédé comporte des moyens 50 qui agissent sur le régulateur 30 pour que la régulation soit assurée au moins pour l'essentiel par le volet d'échappement 19 et non plus la vanne EGR 10.

Ainsi, les moyens 50 permettent d'adapter la régulation, et en particulier le régulateur 30, selon que le critère prédéterminé est respecté ou non.

Tel qu'illustré à la figure 2 encore, les moyens 50 agissent sur un séparateur de signal de commande 40.

Ce séparateur 40 transforme le signal de commande *reg_com* du régulateur 30 en deux signaux de commande 41 et 42.

Le signal 41 est un signal pour commander la position de la vanne EGR 10 tandis que le signal 42 est un signal pour commander la position du volet d'échappement 19.

On va maintenant décrire plus en détail le régulateur 30 et le séparateur 50.

A cet égard la figure 3 montre schématiquement un mode d'implémentation du régulateur 30.

Dans le cas d'espèce, il s'agit d'un régulateur proportionnel-intégral, mais l'homme du métier comprendra que d'autres implémentations sont évidemment possibles.

De façon classique, un tel régulateur comporte une étape d'amplification 31 de gain Kp, un étage d'intégration 32 et un deuxième étage d'amplification 23 de gain Ki associé à l'étage d'intégration 32.

Selon l'invention, les gains Kp et Ki peuvent avoir différentes valeurs choisies selon que ledit critère prédéterminé est respecté ou non, par exemple selon que la vanne EGR 10 a une position d'ouverture supérieure à 60%.

Ainsi, dans ce mode de réalisation, on ne change pas la structure du régulateur 30 selon le critère mais plutôt le ou les gains utilisés dans ce régulateur.

En particulier, selon le respect du critère prédéterminé on utilise des gains Kp et Ki adaptés à la vanne EGR 10 ou au volet d'échappement 19.

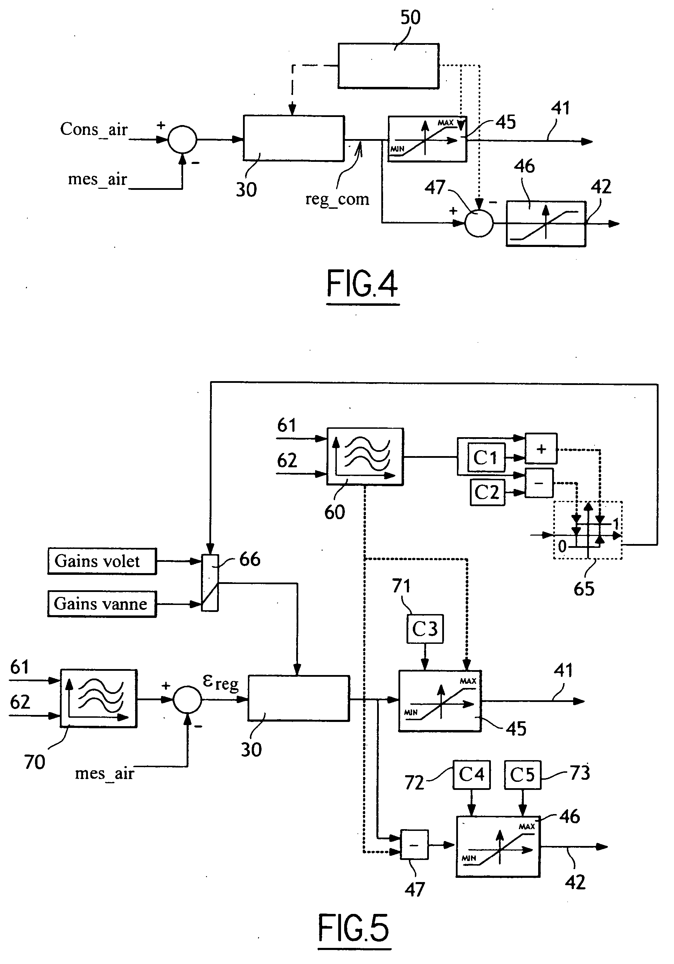

La figure 4 montre schématiquement un mode d'implémentation du séparateur de consigne 40.

Il comporte deux blocs 45 et 46 qui définissent chacun une gamme de valeurs pour lesquelles la vanne EGR 10 et le volet 19 sont censés réguler le débit d'air correctement.

Par exemple, dans le bloc 45 la gamme est définie entre deux plateaux de saturation MIN et MAX de la vanne 10.

Plus précisément, d'après la même figure, on peut voir que le séparateur 40 comporte un bloc soustracteur 47 qui soustrait au signal *reg_com* délivré par le régulateur 30 une valeur fournie par les moyens 50.

Cette valeur définit au moins une limite supérieure d'au moins une des gammes précitées, en l'occurrence d'après la figure la gamme du bloc 45.

La différence obtenue en sortie du bloc soustracteur 47 est ensuite injectée dans le bloc 46.

Une telle implémentation permet de délivrer le signal 41 ou 42 selon la valeur du signal de commande *reg_com* en fonction des gammes précitées.

A titre d'exemple non limitatif, supposons que la valeur fournie par les moyens 50 soit égale à 100.

Supposons par ailleurs que la valeur du signal *reg*_*com* soit égale à 80, donc inférieure à MAX.

Dans ce cas, la valeur de ce signal se trouve dans la gamme du bloc 45.

En outre, cette valeur 80 soustraite à la valeur 100 par le bloc 47 donne
-20.

Cette valeur 80 est donc comprise dans la gamme du bloc 46, mais étant négative on considère qu'elle ne doit pas avoir d'effet sur la position volet d'échappement.

Supposons maintenant que la valeur du signal *reg_com* soit égale à 110.

Dans ce cas, elle n'est plus comprise dans la gamme du bloc 45 de sorte que le signal *reg*_*com* ne correspond plus au signal 41.

Par ailleurs, en sortie du bloc 47 on obtient la valeur 10, qui est cette fois-ci positive et qui se trouve dans la gamme du bloc 46.

Par conséquent, c'est maintenant le signal 42 qui correspond au signal *reg*_*com*.

Et la régulation du débit d'air est alors assurée par le volet d'échappement 19 et non plus la vanne EGR 10.

En particulier, pour continuer à augmenter le débit d'air, le régulateur va délivrer le signal 42 de sorte à fermer un peu plus le volet d'échappement.

En même temps, la vanne EGR 10 va conserver la position qu'elle avait au moment où on sortait de la gamme du bloc 45.

En d'autres termes, elle restera dans un état considéré comme saturé.

En se référant maintenant à la figure 5, on a représenté un exemple non limitatif d'une structure de régulation complète conforme à l'invention.

On retrouve notamment dans cette figure, le régulateur 30 et les blocs 45, 46 et 47.

On peut également voir comment on construit la valeur qui sert notamment à définir ladite limite supérieure de la gamme du bloc 45.

En effet, on utilise selon un aspect préféré de l'invention une cartographie 60 en régime moteur 61 et débit de carburant 62 de la position de la vanne EGR 10.

Cette cartographie 60 sert en outre de manière indirecte à choisir les gains Kp et Ki appropriés.

Plus précisément, une sortie de la cartographie 60 est comparée à une mesure *mes_pos_EGR* de la position de la vanne EGR 10.

A cet effet, on peut construire à partir par exemple de deux constantes C1 et C2 et de la sortie de la cartographie 60 un diagramme d'hystérésis normalisé 65 auquel on compare la mesure *mes_pos_EGR.*

Le résultat de cette comparaison permet d'activer un jeu de valeurs approprié pour les gains Ki et Kp.

Une telle sélection est mise en oeuvre dans un bloc 66.

Il reçoit en entrée ledit résultat ainsi qu'au moins un jeu de valeurs pour les gains Ki et Kp de la vanne 10 et du volet 19.

Il délivre par ailleurs un signal qui agit sur le régulateur 30.

Par exemple ce signal opère une mise à jour des gains Kp et Ki dans les étages 31 et 33.

Ainsi, si l'on considère l'exemple donné plus haut, lorsque la mesure *mes_pos_EGR* montre que l'ouverture de la vanne 10 est inférieure à 60%, valeur fournie par la cartographie 60, le bloc 65 envoie un signal au bloc 66 qui l'amène à sélectionner un jeu de paramètre approprié au contrôle de la vanne 10.

Inversement, lorsque la mesure *mes_pos_EGR* montre que l'ouverture de la vanne 10 est supérieure à 60%, le bloc 65 envoie un signal au bloc 66 qui l'amène à sélectionner un jeu de paramètre approprié au contrôle du volet 19 et non plus de la vanne 10.

Tel qu'illustré encore sur la figure 5, la consigne du débit d'air fournie en entrée de la structure et comparée à la mesure du débit d'air possède une valeur qui est lue dans une cartographie 70 en régime moteur 61 et débit de carburant 62.

Par ailleurs, les blocs 71, 72 et 73 définissent des constantes C3, C4 et C5 qui définissent elles-mêmes une limite basse de la gamme des blocs 45 et 46, et une limite haute de la gamme du bloc 46.

On notera ici que sur la figure 5, les blocs sur fond blanc ont été définis lors d'une calibration, par exemple une calibration du moteur sur banc d'essai à rouleaux.

Bien entendu, l'invention n'est nullement limitée au mode de réalisation présenté ci-dessus.

En particulier, le paramètre prédéterminé du moteur qui est régulé peut correspondre au taux de recirculation des gaz d'échappement.

A cet égard, la structure de régulation admet en entrée non plus une mesure et une consigne de débit d'air mais une estimation et une consigne de taux de recirculation.

Afin d'obtenir ladite estimation, on pourra envisager diverses solutions.

Une première solution consiste à utiliser un capteur de température de l'air frais non encore mélangé aux gaz recirculés qui viennent de la boucle basse pression.

On utilise en outre un capteur de température des gaz recirculés juste avant le mélange et un capteur de température du mélange après la boucle de recirculation basse pression.

Une deuxième solution consiste à utiliser un capteur de température du mélange présent dans un plénum du moteur avec un capteur de pression de ce mélange.

On utilise en outre, au choix, une mesure par capteur ou une estimation du débit d'air.

L'homme du métier comprendra qu'il existe encore d'autres variantes de l'invention.

En particulier, on peut aussi considérer que la régulation du débit d'air et/ou du taux de recirculation soit tout d'abord mise en oeuvre avec le volet d'échappement 19 puis la vanne EGR 10 lorsque le critère prédéterminé sur le volet, cette fois-ci, n'est plus respecté.

## Revendications

1. Moteur comprenant :
- une boucle de recirculation (8) d'un gaz d'échappement du type basse pression dans laquelle les gaz d'échappement (6) passent à travers une turbine (41),
- des moyens de contrôle d'une position d'une vanne de recirculation (10) du gaz d'échappement disposée dans la boucle (8) et d'une position d'un volet d'échappement (19) disposé hors de cette boucle,
- de moyens de mesure d'une grandeur prédéterminée de la vanne (10), et
- des moyens de régulation d'un paramètre prédéterminé de fonctionnement du moteur, adaptés pour agir sur les moyens de contrôle de la position de la vanne si la mesure de la grandeur relative à celle-ci respecte un critère prédéterminé, et sur les moyens de contrôle de la position du volet si ladite mesure ne respecte pas ledit critère,
**caractérisé en ce que**
- les gaz d'échappement (6) passant à travers la turbine (41) sont acheminés vers un filtre à particules (7) duquel une conduite de dérivation (8) permet de recirculer au moins en partie des gaz d'échappement (6) vers un compresseur, et
- les moyens de régulation sont adaptés pour agir exclusivement sur les moyens de contrôle de la position de la vanne ou sur les moyens de contrôle de la position du volet.

2. Moteur selon la revendication 1, **caractérisé en ce que** le paramètre prédéterminé de fonctionnement du moteur est un taux de recirculation du gaz d'échappement.

3. Moteur selon la revendication 1, **caractérisé en ce que** le paramètre prédéterminé est un débit d'air destiné à être mélangé au gaz recirculé.

4. Moteur selon l'une quelconque des revendications 1 à 3, **caractérisé en ce que** les moyens de régulation comportent un seul régulateur (30) dont un gain d'amplification (Kp, Ki) est sélectionné automatiquement en fonction du résultat lié au critère.

5. Procédé de commande d'un moteur selon l'une des revendications 1 à 4, **caractérisé en ce qu'**il comporte une étape où l'on régule un paramètre prédéterminé de fonctionnement du moteur en contrôlant exclusivement une position d'une vanne de recirculation (10) du gaz d'échappement disposée dans la boucle (8) si la mesure d'une grandeur prédéterminée de cette vanne (10) respecte un critère prédéterminé, ou en contrôlant exclusivement une position d'un volet d'échappement (19) disposé hors de cette boucle (8° si ladite mesure ne respecte pas ledit critère.

6. Procédé de commande selon la revendication 5, **caractérisé en ce que** le paramètre prédéterminé de fonctionnement du moteur est un taux de recirculation du gaz d'échappement.

7. Procédé de commande selon la revendication 5, **caractérisé en ce que** le paramètre prédéterminé est un débit d'air destiné à être mélangé au gaz recirculé.

8. Procédé de commande selon l'une des revendications 5 à 7, **caractérisé en ce que** la grandeur prédéterminée est la position de la vanne (10) et **en ce que** le respect du critère consiste à déterminer si cette position est inférieure à une valeur seuil estimée.

9. Procédé de commande selon l'une des revendications 5 à 8, **caractérisé en ce que** l'on détermine la position du volet (19) et de la vanne (10) au moyen d'un seul régulateur (30) dont on choisit automatiquement un gain d'amplification (Kp, Ki) en fonction du résultat lié au critère.

10. Procédé de commande selon l'une des revendications 8 à 9, **caractérisé en ce que** l'on estime la valeur seuil à partir d'une cartographie (60) en régime moteur et débit carburant.

## Patentansprüche

1. Motor, umfassend:
- einen Wiedergewinnungszyklus (8) von Abgasen vom Niederdrucktyp, bei dem die Abgase (6) durch eine Turbine (41) geleitet werden,
- Mittel zur Kontrolle einer Position eines Wiedergewinnungsventils (10) des Abgases, das in dem Zyklus (8) angeordnet ist, und einer Position einer Ablassklappe (19), die außerhalb dieses Zyklus angeordnet ist,
- Mittel zum Messen einer vorbestimmten Größe des Ventils (10),
und
- Mittel zur Regelung eines vorbestimmten Funktionsparameters des Motors, die dazu vorgesehen sind, auf die Mittel zur Kontrolle der Position des Ventils einzuwirken, wenn die Messung der auf dieses bezogenen Größe ein vorbestimmtes Kriterium einhält, und auf die Mittel zur Kontrolle der Position der Klappe einzuwirken, wenn die Messung das Kriterium nicht einhält, **dadurch gekennzeichnet, dass**
- die Abgase (6), die durch die Turbine (41) geleitet werden, zu einem Partikelfilter (7) befördert werden, von dem es eine Abzweigleitung (8) ermöglicht, zumindest teilweise Abgase (6) zu einem Kompressor wiederzugewinnen, und
- die Regelungsmittel dazu vorgesehen sind, ausschließlich auf die Mittel zur Kontrolle der Position des Ventils oder auf die Mittel zur Kontrolle der Position der Klappe einzuwirken.

2. Motor nach Anspruch 1, **dadurch gekennzeichnet, dass** der vorbestimmte Funktionsparameter des Motors eine Wiedergewinnungsrate des Abgases ist.

3. Motor nach Anspruch 1, **dadurch gekennzeichnet, dass** der vorbestimmte Parameter eine Luftmenge ist, die dazu bestimmt ist, mit dem wiedergewonnenen Gas gemischt zu werden.

4. Motor nach einem der Ansprüche 1 bis 3, **dadurch gekennzeichnet, dass** die Regelungsmittel einen einzigen Regulator (30) umfassen, dessen Verstärkung (Kp, Ki) automatisch in Abhängigkeit von dem mit dem Kriterium verbundenen Resultat ausgewählt wird.

5. Verfahren zur Steuerung eines Motors nach einem der Ansprüche 1 bis 4, **dadurch gekennzeichnet, dass** es einen Schritt umfasst, in dem ein vorbestimmter Funktionsparameter des Motors geregelt wird, wobei ausschließlich eine Position eines Wiedergewinnungsventils (10) das Abgases, das in dem Zyklus (8) angeordnet ist, kontrolliert wird, wenn die Messung einer vorbestimmten Größe dieses Ventils (10) ein vorbestimmtes Kriterium einhält, oder wobei ausschließlich eine Position einer Ablassklappe (19), die außerhalb dieses Zyklus (8) angeordnet ist, kontrolliert wird, wenn die Messung das Kriterium nicht einhält.

6. Steuerungsverfahren nach Anspruch 5, **dadurch gekennzeichnet, dass** der vorbestimmte Funktionsparameter des Motors eine Wiedergewinnungsrate des Abgases ist.

7. Steuerungsverfahren nach Anspruch 5, **dadurch gekennzeichnet, dass** der vorbestimmte Parameter eine Luftmenge ist, die dazu bestimmt ist, mit dem wiedergewonnenen Gas gemischt zu werden.

8. Steuerungsverfahren nach einem der Ansprüche 5 bis 7, **dadurch gekennzeichnet, dass** die vorbestimmte Größe die Position des Ventils (10) ist, und dass die Einhaltung des Kriteriums darin besteht zu bestimmen, ob diese Position unter einem geschätzten Schwellenwert liegt.

9. Steuerungsverfahren nach einem der Ansprüche 5 bis 8, **dadurch gekennzeichnet, dass** die Position der Klappe (19) und des Ventils (10) mit Hilfe eines einzigen Regulators (30) bestimmt wird, dessen Verstärkung (Kp, Ki) automatisch in Abhängigkeit von dem mit dem Kriterium verbundenen Resultat gewählt wird.

10. Steuerungsverfahren nach einem der Ansprüche 8 bis 9, **dadurch gekennzeichnet, dass** der Schwellenwert aus einer Kartographie (60) aus Motordrehzahl und Treibstoffmenge geschätzt wird.

## Claims

1. Engine comprising:
- an exhaust gas recirculation loop (8) of the low pressure type in which the exhaust gases (6) pass through a turbine (41),
- means for controlling a position of an exhaust gas recirculation valve (10) arranged in the loop (8) and a position of an exhaust flap (19) arranged outside this loop,
- means for measuring a predefined value of the valve (10), and
- means for regulating a predefined parameter of engine operation, adapted to act on the valve position control means if the measurement of the value relating thereto complies with a predefined criterion, and on the flap position control means if said measurement does not comply with said criterion,
**characterized in that**
- the exhaust gases (6) passing through the turbine (41) are conducted towards a particulate filter (7), of which a bypass pipe (8) allows recirculation of at least part of the exhaust gases (6) towards a compressor, and
- the regulating means are adapted to act exclusively on the valve position control means or on the flap position control means.

2. Engine according to Claim 1, **characterized in that** the predefined parameter of engine operation is an exhaust gas recirculation rate.

3. Engine according to Claim 1, **characterized in that** the predefined parameter is an air flow intended to be mixed with the recirculated gas.

4. Engine according to any of Claims 1 to 3, **characterized in that** the regulating means comprise a single regulator (30), an amplification gain (Kp, Ki) of which is selected automatically as a function of the result linked to the criterion.

5. Method for controlling an engine according to any of Claims 1 to 4, **characterized in that** it comprises a step in which a predefined parameter of engine operation is regulated by controlling exclusively a position of an exhaust gas recirculation valve (10) arranged in the loop (8) if the measurement of a predefined value of this valve (10) complies with a predefined criterion, or by controlling exclusively a position of an exhaust flap (19) arranged outside this loop (8° if said measurement does not comply with said criterion.

6. Control method according to Claim 5, **characterized in that** the predefined parameter of engine operation is an exhaust gas recirculation rate.

7. Control method according to Claim 5, **characterized in that** the predefined parameter is an air flow intended to be mixed with the recirculated gas.

8. Control method according to any of Claims 5 to 7, **characterized in that** the predefined value is the position of the valve (10) and **in that** observation of the criterion consists of determining whether this position is less than an estimated threshold value.

9. Control method according to any of Claims 5 to 8, **characterized in that** the positions of the flap (19) and of the valve (10) are determined by means of a single regulator (30), an amplification gain (Kp, Ki) of which is selected automatically as a function of the result linked to the criterion.

10. Control method according to any of Claims 8 to 9, **characterized in that** the threshold value is estimated from a map (60) of the engine speed and fuel flow.
